(19) Europäisches Patentamt
European Patent Office
Office européen des brevets

(11) **EP 3 541 047 B1**

(12) **EUROPEAN PATENT SPECIFICATION**

(45) Date of publication and mention
of the grant of the patent:
**24.02.2021 Bulletin 2021/08**

(21) Application number: **16924327.6**

(22) Date of filing: **21.12.2016**

(51) Int Cl.:
***H04L 29/08*** *(2006.01)*        ***H04B 3/32*** *(2006.01)*

(86) International application number:
**PCT/CN2016/111372**

(87) International publication number:
**WO 2018/112807 (28.06.2018 Gazette 2018/26)**

(54) **CROSSTALK CANCELLATION METHOD, APPARATUS AND SYSTEM**

NEBENSPRECHUNTERDRÜCKUNGSVERFAHREN, -VORRICHTUNG UND -SYSTEM

PROCÉDÉ, APPAREIL ET SYSTÈME D'ANNULATION DE DIAPHONIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2019 Bulletin 2019/38**

(73) Proprietor: **Huawei Technologies Co., Ltd.
Longgang District
Shenzhen, Guangdong 518129 (CN)**

(72) Inventors:
• **XIE, Genmao
Shenzhen
Guangdong 518129 (CN)**
• **PEI, Daoyu
Shenzhen
Guangdong 518129 (CN)**
• **WAN, Xifeng
Shenzhen
Guangdong 518129 (CN)**

(74) Representative: **Gill Jennings & Every LLP
The Broadgate Tower
20 Primrose Street
London EC2A 2ES (GB)**

(56) References cited:
**WO-A1-2016/032466      CN-A- 104 247 283
US-A1- 2013 215 940**

• **VLADIMIR OKSMAN ET AL: "The ITU-T's new
g.vector standard proliferates 100 mb/s dsl",
IEEE COMMUNICATIONS MAGAZINE, IEEE
SERVICE CENTER, PISCATAWAY, US, vol. 48,
no. 10, 1 October 2010 (2010-10-01), pages
140-148, XP011341175, ISSN: 0163-6804, DOI:
10.1109/MCOM.2010.5594689**

## Description

### TECHNICAL FIELD

The present invention relates to the field of communications technologies, and in particular, to a crosstalk cancellation method and apparatus.

### BACKGROUND

On a digital subscriber line (English: Digital Subscriber Line, DSL for short), a crosstalk cancellation apparatus used to eliminate crosstalk interference between a central office device and customer premises equipment (English: Customer Premises Equipment, CPE for short) is usually a vectoring control entity (English: Vectoring Control Entity, VCE for short) chip. The VCE chip is usually disposed on a central office device of the DSL, for example, a digital subscriber line access multiplexer (English: Digital Subscriber Line Access Multiplexer, DSLAM for short).

Currently, the VCE chip mainly includes a control module and a crosstalk cancellation module. The control module is configured to calculate channel crosstalk between the central office device and the CPE based on a channel physical parameter reported by a baseband chip, and generate a crosstalk coefficient. The crosstalk cancellation module is configured to receive crosstalk signals of a plurality of ports on the central office device, and preprocess the crosstalk signals based on the crosstalk coefficient.

However, in the prior art, a capacity of the VCE chip is generally fixed, and the VCE chip can process crosstalk signals of only a specific quantity of ports, and flexibility of using the VCE chip is relatively low.

WO 2016/032466 describes an exemplary system or computer implemented method for implementing Persistent Management Agent (PMA) functions for the control and coordination of DPU and DSLAM components.

US 2013/215940 describes an apparatus comprising a first transceiver at a central office (CO) coupled to a second transceiver at a customer premise equipment (CPE) via a digital subscriber line (DSL), a crosstalk precoder coupled to the first transceiver at the CO, and a vectoring control entity (VCE) coupled to the transceiver via a feedback channel and to the crosstalk precoder, wherein the second transceiver comprises a noise monitor configured to detect non-crosstalk noise in a downstream signal from the CO to the CPE, and wherein the first transceiver is configured to receive a predefined special feedback signal from the second transceiver that indicates whether non-crosstalk noise is detected in the downstream signal instead of a measured error value.

### SUMMARY

The present invention is defined by the attached independent claims. Other preferred embodiments may be found in the dependent claims.

The embodiments of the present invention provide a crosstalk cancellation method and apparatus. The computing center and the cancellation module in the crosstalk cancellation apparatus are deployed in different physical locations, and the cancellation module may include at least one canceller. When a quantity of signal transceiver ports of the central office device increases, a crosstalk cancellation scale of the crosstalk cancellation apparatus can be expanded by increasing a quantity of cancellers in the cancellation module and allocating more computing resources to the computing center. In this expansion method, there is no need to customize a new chip, and expansion is relatively simple. Therefore, crosstalk cancellation processing can be flexibly performed for central office devices with different quantities of ports.

### BRIEF DESCRIPTION OF DRAWINGS

FIG. 1 is a schematic diagram of an application scenario of a crosstalk cancellation apparatus according to an embodiment of the present invention;
FIG. 2-1 is a schematic structural diagram of a crosstalk cancellation apparatus according to an embodiment of the present invention;
FIG. 2-2 is a schematic structural diagram of another crosstalk cancellation apparatus according to an embodiment of the present invention;
FIG. 3-1A and FIG. 3-1B are a flowchart of a crosstalk cancellation method according to an embodiment of the present invention;
FIG. 3-2 is a flowchart of a method for sending a crosstalk coefficient by a computing center according to an embodiment of the present invention;

FIG. 3-3 is a flowchart of a method for preprocessing a crosstalk signal by a cancellation module according to an embodiment of the present invention;

FIG. 4-1 is a schematic structural diagram of a crosstalk cancellation system according to an embodiment of the present invention;

FIG. 4-2 is a flowchart of another crosstalk cancellation method according to an embodiment of the present invention;

FIG. 5 is a schematic structural diagram of a computing center according to an embodiment of the present invention; and

FIG. 6 is a schematic structural diagram of a cancellation module according to an embodiment of the present invention.

## DESCRIPTION OF EMBODIMENTS

To make the objectives, technical solutions, and advantages of this application clearer, the following further describes the implementations of this application in detail with reference to the accompanying drawings.

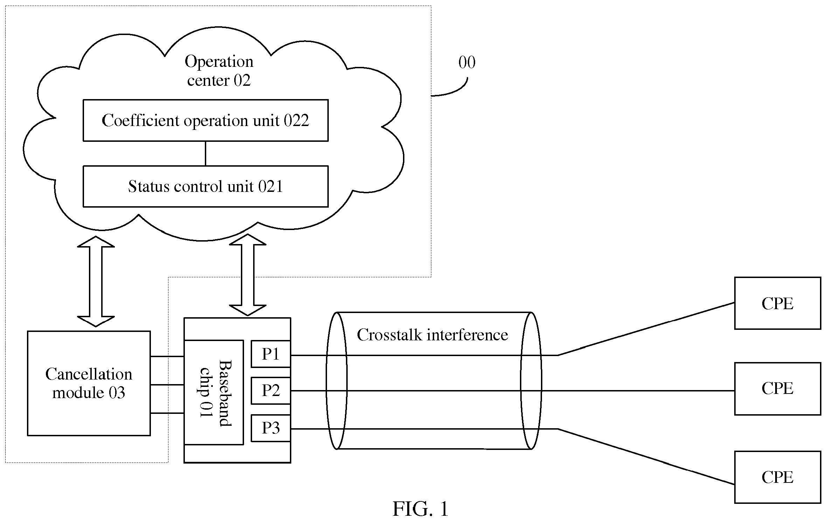

FIG. 1 is a schematic diagram of an application scenario of a crosstalk cancellation apparatus according to an embodiment of the present invention. Referring to FIG. 1, the application scenario may include a crosstalk cancellation apparatus 00, a baseband chip 01, and a plurality of CPEs. The baseband chip 01 is deployed in a central office device. The baseband chip 01 may establish communication connections to the plurality of CPEs by using a plurality of signal transceiver ports (for example, PI, P2, and P3), so as to perform analog-to-digital conversion or digital-to-analog conversion on interaction signals between the central office device and the plurality of CPEs. The crosstalk cancellation apparatus 00 is connected to the baseband chip 01, and is configured to preprocess a signal obtained after analog-to-digital conversion or a signal obtained before digital-to-analog conversion of the baseband chip 01. The preprocessing may include performing crosstalk cancellation processing on a signal (that is, an uplink signal) obtained after analog-to-digital conversion of the baseband chip 01, and performing precoding processing on a signal (that is, a downlink signal) obtained before digital-to-analog conversion of the baseband chip 01.

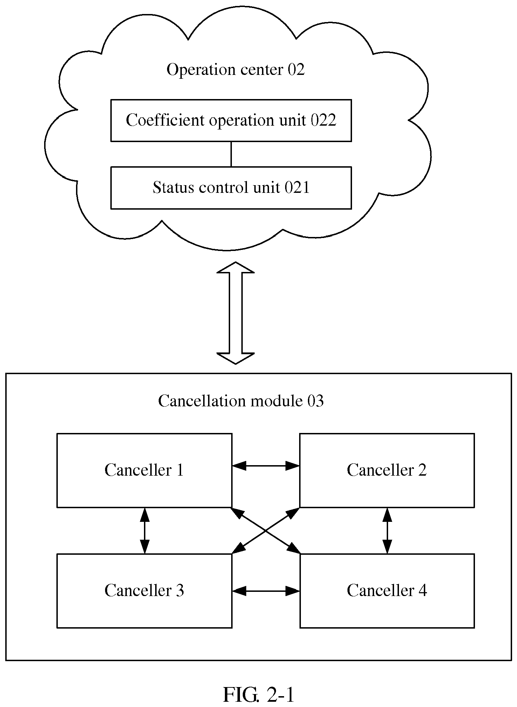

FIG. 2-1 is a schematic structural diagram of a crosstalk cancellation apparatus according to an embodiment of the present invention. Referring to FIG. 1 and FIG. 2-1, the crosstalk cancellation apparatus may include a computing center 02 and a cancellation module 03 that are deployed in different physical locations. The computing center 02 may be deployed in a cloud server or a central office server. The cancellation module 03 may be deployed in a central office device of a DSL, and the cancellation module 03 may include L cancellers, where L is a positive integer.

The computing center 02 may be connected to the cancellation module 03 through a first network interface, and connected to the baseband chip 01 through a second network interface (not shown in FIG. 2-1). The computing center 02 is configured to: calculate a crosstalk coefficient based on a status parameter and a channel physical parameter that are reported by the baseband chip 01, and deliver the crosstalk coefficient to the canceller in the cancellation module 03 through the first network interface.

Each canceller in the cancellation module 03 is connected to at least one port of the baseband chip, and is configured to preprocess, based on the crosstalk coefficient, a crosstalk signal received through the at least one port. A port connected to each canceller is a signal transceiver port on the baseband chip 01.

In conclusion, this embodiment of the present invention provides a crosstalk cancellation apparatus. The computing center and the cancellation module in the crosstalk cancellation apparatus are deployed in different physical locations, and the cancellation module may include at least one canceller. When a quantity of signal transceiver ports of the central office device increases, a crosstalk cancellation scale of the crosstalk cancellation apparatus can be expanded by increasing a quantity of cancellers in the cancellation module and allocating more computing resources to the computing center. In this expansion method, there is no need to customize a new chip, and expansion is relatively simple. Therefore, crosstalk cancellation processing can be flexibly performed for central office devices with different quantities of ports.

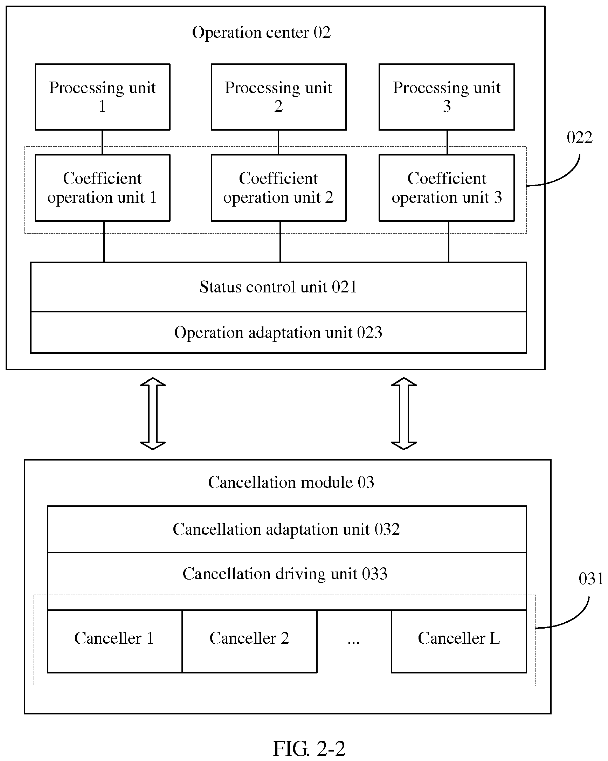

Further, referring to FIG. 2-2, the computing center 02 may include a status control unit 021 and at least one coefficient calculation unit 022.

The status control unit 021 is configured to: receive a status parameter and a channel physical parameter that are reported by the baseband chip, and determine a crosstalk coefficient calculation model based on the status parameter.

Each coefficient calculation unit in the at least one coefficient calculation unit 022 is configured to perform calculation for the channel physical parameter based on the crosstalk coefficient calculation model under an instruction of the status control unit 021, to obtain crosstalk coefficients of a plurality of ports or a plurality of subcarriers.

In this embodiment of the present invention, a device (for example, a central office server) in which the computing center 02 is deployed may include a plurality of processing units. Each coefficient calculation unit in the computing center may be bound to one processing unit, to perform an operation on crosstalk coefficients of a specific quantity of ports or subcarriers. For example, if it is assumed that the crosstalk cancellation apparatus needs to process crosstalk signals of 64 ports, and each coefficient calculation unit in the computing center can complete an operation on crosstalk coefficients of 16 ports, an operation on crosstalk coefficients of the 64 ports can be completed by using four coefficient calculation units. If a calculation capability of each coefficient calculation unit is measured according to a quantity of subcarriers, each channel in a DSL system includes 2048 subcarriers, and each coefficient calculation unit can complete an operation on crosstalk coefficients of 700 subcarriers, an operation on crosstalk coefficients of the 2048 subcarriers can be completed by using three coefficient calculation units.

Therefore, when a quantity of ports in the DSL central office device is increased, an operation scale of the crosstalk cancellation apparatus can be expanded by increasing a quantity of coefficient calculation units in the computing center, that is, allocating more processing units to the computing center. For example, when the quantity of signal transceiver ports of the central office device is increased from 64 to 80, the operation scale of the crosstalk cancellation apparatus can be expanded by adding one additional coefficient calculation unit to the computing center (that is, allocating one additional processing unit to the computing center). This expansion method is relatively simple, and there is no need to customize a new chip, thereby improving flexibility of using the crosstalk cancellation apparatus.

Optionally, referring to FIG. 2-2, in this embodiment of the present invention, L may be an integer greater than 1. In other words, the cancellation module 03 may include a plurality of cancellers 031. Any two of the L cancellers 031 may be connected to each other through a third network interface.

An $i^{th}$ canceller in the L cancellers may be connected to $N_i$ ports, where i is a positive integer less than or equal to L, and $N_i$ is a positive integer. The $i^{th}$ canceller is configured to: receive $N_i$ crosstalk signals through the $N_i$ ports, send the received $N_i$ crosstalk signals to each of the other (L-1) cancellers through the third network interfaces, and preprocess the $N_i$ crosstalk signals based on the crosstalk coefficients and crosstalk signals sent by the other (L-1) cancellers.

Therefore, the $i^{th}$ canceller can process interference from at least N ports to each port in the $N_i$ ports, where N meets:

$$N = \sum_{i=1}^{L} N_i,$$ that is, N represents a total quantity of ports connected to the cancellation module. In this embodiment of the present invention, Ni×N may be used to indicate a specification of the $i^{th}$ canceller. To be specific, a quantity of ports connected to the $i^{th}$ canceller is $N_i$, and the $i^{th}$ canceller can process interference from at least the N ports to the $N_i$ ports.

For example, as shown in FIG. 2-1, the cancellation module 03 may include four cancellers, and each of the four cancellers may be connected to 16 ports on the baseband chip. Therefore, each canceller may receive 16 crosstalk signals, and can send the 16 crosstalk signals to each of the other three cancellers through Ethernet interfaces. Meanwhile, each canceller may further receive a total of 48 crosstalk signals sent by the other three cancellers. Then, each canceller can preprocess, based on received crosstalk coefficients and the 48 crosstalk signals, the 16 crosstalk signals received by the canceller.

In actual application, each canceller in the cancellation module may be a chip with a customized specification. Because hardware (that is, the cancellation module) in the crosstalk cancellation apparatus is designed in a modularization manner, when the quantity of ports of the central office device is increased, a crosstalk cancellation capability of the cancellation module can be expanded by increasing a quantity of cancellers in the cancellation module (that is, superposing more chips), so that the expanded cancellation module can match the quantity of ports of the central office device, thereby effectively improving flexibility of using the cancellation module and the crosstalk cancellation apparatus.

It should be noted that, in actual application, if none of ports connected to a canceller goes online, because the ports that are not online do not cause interference to crosstalk signals of other ports, in a process in which the cancellers send crosstalk signals to each other, there may be no need to send crosstalk signals to the canceller connected to the ports that are not online. For example, in the four cancellers shown in FIG. 2-1, if none of 16 ports connected to a canceller 4 goes online, when preprocessing crosstalk signals, the cancellation module 03 may control a canceller 1 to a canceller 3 to send crosstalk signals to each other without sending crosstalk signals to the canceller 4.

It should be further noted that, in this embodiment of the present invention, the first to third network interfaces may be all Ethernet interfaces.

It should be further noted that, in actual application, referring to FIG. 2-2, the computing center 02 may further include an operation adaptation unit 023. The operation adaptation unit 023 is configured to: adapt an interaction message between the computing center 02 and the cancellation module 03, and adapt an interaction message between the computing center 02 and the baseband chip 01.

The cancellation module 03 may further include a cancellation adaptation unit 032 and a cancellation driving unit 033. The cancellation adaptation unit 032 is configured to adapt an interaction message between the cancellation module 03 and the computing center 02, and the cancellation driving unit 033 is configured to distribute received crosstalk coefficients to each canceller 031 and drive each canceller 031.

In conclusion, this embodiment of the present invention provides a crosstalk cancellation apparatus. The computing center and the cancellation module in the crosstalk cancellation apparatus are deployed in different physical locations. The computing center may be deployed in a cloud server or a central office server. The cancellation module may be deployed in a central office device, and the cancellation module may include at least one canceller. When a signal transceiver capacity of a central office device increases, a cancellation scale of the crosstalk cancellation apparatus can be expanded by increasing a quantity of cancellers in the cancellation module and allocating more computing resources to the computing center. In this expansion method, there is no need to customize a new chip, and expansion is relatively simple. Therefore, crosstalk cancellation processing can be flexibly performed for central office devices with different quantities of ports.

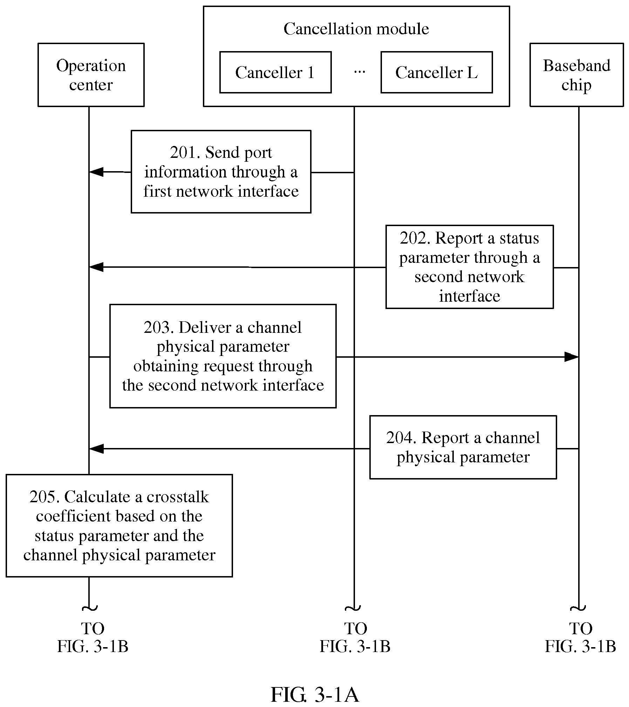

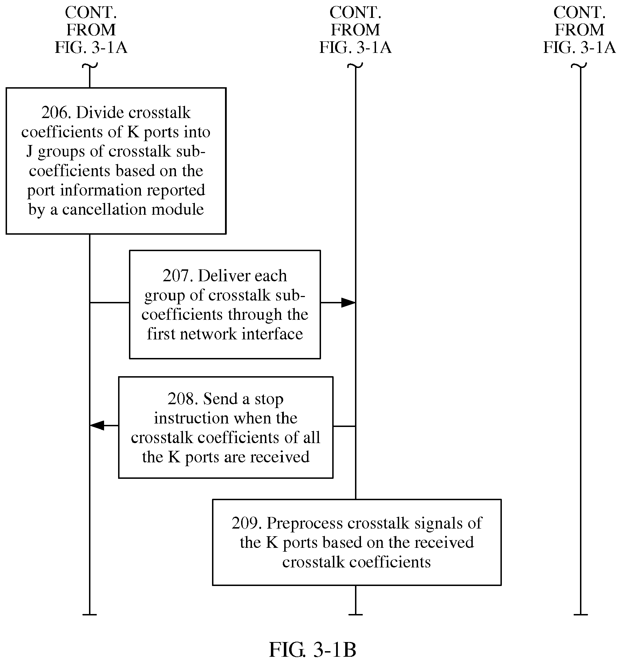

FIG. 3-1A and FIG. 3-1B are a flowchart of a crosstalk cancellation method according to an embodiment of the present invention. The method may be applied to the application scenario shown in FIG. 1. Referring to FIG. 3-1A and FIG. 3-1B, the method may include the following steps.

Step 201: A cancellation module sends port information to a computing center through a first network interface.

In this embodiment of the present invention, referring to FIG. 2-1, the cancellation module in the crosstalk cancellation apparatus may include L cancellers, and an $i^{th}$ canceller is connected to $N_i$ ports. i is a positive integer less than or equal to L, and $N_i$ is a positive integer. The $i^{th}$ canceller is configured to preprocess signals transmitted and received by the $N_i$ ports, and the $i^{th}$ canceller can process interference from at least N ports to each port in the $N_i$ ports,

where N meets: $N = \sum_{i=1}^{L} N_i$ , that is, N represents a total quantity of ports connected to the cancellation module. When a system is powered on, each canceller in the cancellation module may report port information to a status control unit in the computing center through a first network interface. The port information may include an identifier (for example, a port number) of a port connected to each canceller. In this way, the status control unit determines, based on the port information, a crosstalk coefficient that needs to be delivered to each canceller. Further, the computing center may further determine, based on the port information, the total quantity of ports connected to the cancellation module, so as to determine a maximum scale of crosstalk coefficients that need to be calculated. Because the $i^{th}$ canceller in the L cancellers is connected to the $N_i$ ports, the status control unit may determine that the total quantity of ports connected to the cancellation module is N. In other words, the cancellation module can process crosstalk between at least N ports. Therefore, the status control unit may determine that crosstalk coefficients of up to N ports need to be calculated.

For example, it is assumed that the cancellation module includes four cancellers as shown in FIG. 2-1, and each canceller is connected to 16 ports. When the cancellation module is powered on, port information may be reported to the status control unit in the computing center through an Ethernet interface. The port information may be shown in Table 1. Ports connected to a canceller 1 are ports 1 to 16, and ports connected to a canceller 4 are ports 49 to 64. In the four cancellers, a specification of each canceller may be expressed as $16 \times 64$, that is, a quantity of ports connected to each canceller is 16, and each canceller may process interference caused by at least 64 ports to the 16 ports.

**Table 1**

| Canceller | Port number |
|---|---|
| Canceller 1 | 1-16 |
| Canceller 2 | 17-32 |
| Canceller 3 | 33-48 |
| Canceller 4 | 49-64 |

Step 202: A baseband chip reports a status parameter to the computing center through a second network interface.

In this embodiment of the present invention, the baseband chip deployed in a central office device is configured to perform analog-to-digital conversion or digital-to-analog conversion on signals transmitted and received by each port. The baseband chip may work in a plurality of states, for example, OPV1, RPV1, or OPV2. When a state of the baseband chip changes, the baseband chip may report, to the status control unit in the computing center through the second network interface, a status parameter obtained after the change. The status parameter is used to indicate a status of each port in current online ports of the baseband chip. For example, the status parameter reported by the baseband chip to the status control unit in the computing center through an Ethernet interface may include a status of each port in K ports that are currently online.

Step 203: The computing center delivers a channel physical parameter obtaining request to the baseband chip through the second network interface.

After receiving the status parameter reported by the baseband chip, the status control unit in the computing center may deliver the channel physical parameter obtaining request to the baseband chip, so as to obtain a channel physical parameter reported by the baseband chip. The channel physical parameter is a parameter used to reflect a channel status, and may specifically include a gain, a frequency domain equalizer (English: frequency domain equalizer, FEQ for short) coefficient, an error report block (English: Error Report Block, ERB for short), and the like of a channel.

Step 204: The baseband chip reports a channel physical parameter to a status control unit.

After receiving the channel physical parameter obtaining request, the baseband chip may report the current channel physical parameter to the status control unit in the computing center through the second network interface, for example, report parameters such as a gain, an FEQ coefficient, and an ERB of a current channel.

Step 205: Calculate a crosstalk coefficient based on the status parameter and the channel physical parameter.

After receiving the channel physical parameter reported by the baseband chip, the status control unit in the computing center may determine a crosstalk coefficient calculation model based on the status parameter previously reported by the baseband chip, and may calculate, based on a status of the baseband chip, a total quantity K of ports that are currently online, where K is a positive integer less than or equal to N. Therefore, the status control unit may determine that only crosstalk coefficients of the K ports need to be calculated. Then, the status control unit may send the received channel physical parameter to a coefficient calculation unit, and control the coefficient calculation unit to perform calculation for the channel physical parameter based on the crosstalk coefficient calculation model, so as to obtain crosstalk coefficients of each port in the K ports. Signals transmitted and received by each port in the K ports are interfered with by signals of the other (K-1) ports and the signals of the port itself, and the signals transmitted and received by each port include signals of M subcarriers in total. Therefore, the crosstalk coefficients obtained by the coefficient calculation unit through calculation may be represented by using a three-dimensional matrix: K×K×M. For a signal on a $K^{th}$ subcarrier in the M subcarriers, the crosstalk coefficients of the K ports may be expressed as:

$$H = \begin{bmatrix} h_{11} & h_{12} & ... & h_{1K} \\ h_{21} & h_{22} & ... & h_{2K} \\ ... & ... & ... & ... \\ h_{K1} & h_{K2} & ... & h_{KK} \end{bmatrix} \qquad \text{Formula (1)}$$

where $h_{ij}$ represents a crosstalk coefficient used to eliminate interference caused by a $j^{th}$ port to an $i^{th}$ interfered port (victim port). For example, $h_{12}$ represents a crosstalk coefficient used to eliminate interference caused by port 2 to port 1. K coefficients in row i in the matrix are crosstalk coefficients used to eliminate interference caused by each port in the K ports to the $i^{th}$ interfered port. In other words, crosstalk coefficients of each interfered port may include K coefficients.

For example, if the computing center determines, through calculation based on the status of the baseband chip, that the total quantity K of ports that are currently online is 64, and the total quantity N of ports connected to the cancellation module is 64, the computing center may further determine that crosstalk coefficients of K=64 ports need to be calculated. Alternatively, if the computing center determines, through calculation, that the total quantity K of ports that are currently online is 48, the computing center may determine that only crosstalk coefficients of K=48 ports need to be calculated.

Step 206: Divide crosstalk coefficients of K ports into J groups of crosstalk sub-coefficients based on the port information reported by the cancellation module.

After obtaining the crosstalk coefficients through calculation, the computing center may determine, based on the identifier of the port connected to each of the L cancellers, a quantity J of cancellers connected to the K ports, and then divide the crosstalk coefficients of the K ports into J groups of crosstalk sub-coefficients. A $j^{th}$ group of crosstalk sub-coefficients includes crosstalk coefficients of $K_j$ ports connected to a $j^{th}$ canceller, and j is an integer that is greater than or equal to 1 and less than or equal to J.

For example, if it is assumed that the crosstalk coefficients of K=64 ports that are obtained by the coefficient calculation unit through calculation are shown in Formula (1), and the port information reported by the cancellation module is shown in Table 1, the status control unit may determine that the four cancellers in the cancellation module are connected to the 64 ports, and therefore may divide the crosstalk coefficients shown in Formula (1) into four groups of crosstalk sub-coefficients. A first group of crosstalk sub-coefficients HI corresponding to the canceller 1 may include crosstalk coefficients in rows 1 to 16 shown in Formula (1), and a fourth group of crosstalk sub-coefficients H4 corresponding to the canceller 4 may include crosstalk coefficients in rows 49 to 64 shown in Formula (1).

Alternatively, if the total quantity K of ports that are currently online is 48, and cancellers 1 to 3 in the four cancellers are connected to the 48 ports, because the computing center calculates only crosstalk coefficients of K=48 ports, the computing center may divide the crosstalk coefficients of the 48 ports into three groups of crosstalk sub-coefficients.

Step 207: Deliver each group of crosstalk sub-coefficients in the crosstalk coefficients to a corresponding canceller through the first network interface.

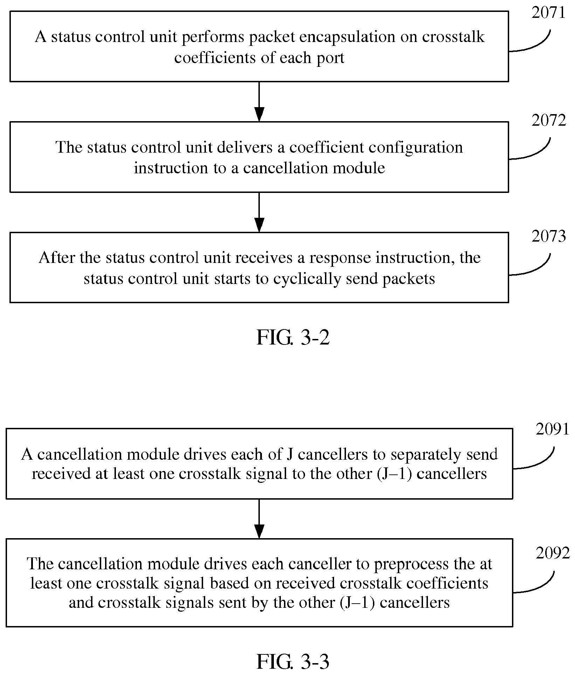

Further, the status control unit may respectively deliver the J groups of crosstalk sub-coefficients to the J cancellers. In this embodiment of the present invention, to improve sending efficiency and compress an amount of data to be sent, a procedure of sending the crosstalk coefficients may be shown in FIG. 3-2, and includes the following steps.

Step 2071: The status control unit performs packet encapsulation on crosstalk coefficients of each port.

To improve coefficient delivery efficiency, the status control unit may encapsulate the crosstalk coefficients of each port (which may also be referred to as an interfered port) based on a preset packet structure. If a maximum length of each packet is MaxB bytes (for example, 1500 bytes), a crosstalk coefficient bit width of each subcarrier is n bytes, and each port includes M subcarriers in total, a quantity of packets required for encapsulating each of the crosstalk coefficients of each interfered port may be $n \times M/MaxB$. In addition, the crosstalk coefficients of each interfered port may include K coefficients. Therefore, a total quantity of packets required for encapsulating the crosstalk coefficients of each interfered port may be $K \times (n \times M/MaxB)$.

In this embodiment of the present invention, a packet structure of each packet may be: [interfered port number] [interfering port number] [fragment index] [coefficient format] [coefficient]. The coefficient format in the packet structure is a format of each crosstalk coefficient. The format of the crosstalk coefficient may be defined by using a payload (English: payload) format, and the coefficient format may generally be: [imaginary part] [real part] [index].

Through definition of the coefficient format, an amount of data to be transmitted may be reduced as much as possible without affecting accuracy. Further, the coefficient format may further define a bit width of a coefficient and index sharing. In this case, the coefficient format may be: [imaginary part] [real part] [index], and the coefficient format may further include a management field: [coefficient bit width] [index sharing]. The coefficient bit width is to define a bit width of the imaginary part and a bit width of the real part of the coefficient, and the index sharing is to define that several subcarriers use a same coefficient. For example, it may be defined that the coefficient bit width of the imaginary part and the coefficient bit width of the real part are 10, and it may be defined that four subcarriers use a same coefficient. Because indexes of adjacent subcarriers are generally of same or similar order of magnitude, a plurality of adjacent subcarriers may share one index. Therefore, an amount of data that needs to be transmitted can be further reduced.

Step 2072: The status control unit delivers a coefficient configuration instruction to the cancellation module.

After completing packet encapsulation, the status control unit may deliver the coefficient configuration instruction to the cancellation module. The coefficient configuration instruction may include a quantity of ports corresponding to the crosstalk coefficients to be delivered by the status control unit, so as to instruct the cancellation module to start coefficient configuration, and the coefficient configuration instruction may be used to indicate that the quantity of ports corresponding to the to-be-sent crosstalk coefficients is K. For example, the coefficient configuration instruction may be used to indicate that the status control unit is to deliver the crosstalk coefficients of 64 ports.

Step 2073: After receiving a response instruction, the status control unit starts to cyclically send packets.

After receiving the coefficient configuration instruction, the cancellation module may send the response instruction to the status control unit. After receiving the response instruction, the status control unit may successively deliver, through the first network interface to the J cancellers, the packets in which the crosstalk coefficients of the K ports are encapsulated, and the status control unit may cyclically send the crosstalk coefficients of the K ports to the J cancellers until a stop instruction sent by the cancellation module is received. In other words, after successively sending the crosstalk coefficients of the first to the $K^{th}$ ports to the corresponding cancellers, if no stop instruction is received, the status control unit may continue successively sending the crosstalk coefficients of the first to the $K^{th}$ ports. Because the crosstalk coefficients of each port are encapsulated in $K \times \lceil n \times m/MaxB \rceil$ packets, the status control unit needs to send $K \times \lceil n \times m/MaxB \rceil$ packets when delivering the crosstalk coefficients of each port, where $\lceil \ \rceil$ represents rounding up.

For example, the status control unit may first successively deliver crosstalk coefficients of ports 1 to 16 to the canceller 1, then successively deliver crosstalk coefficients of ports 17 to 32 to the canceller 2, then successively deliver crosstalk coefficients of ports 33 to 48 to the canceller 3, and finally successively deliver crosstalk coefficients of ports 49 to 64 to the canceller 4. After completing sending the packets of the crosstalk coefficients of all the K ports, if no stop instruction reported by the cancellation module is received, the status control unit may continue successively delivering the crosstalk coefficients of all the ports in a packet form starting from port 1.

Step 208: After receiving the crosstalk coefficients of all the K ports, the cancellation module sends a stop instruction to the computing center.

In this embodiment of the present invention, before sending the crosstalk coefficients, the status control unit delivers the coefficient configuration instruction to the cancellation module, and the cancellation module may determine, according to the coefficient configuration instruction, that the quantity of ports corresponding to the crosstalk coefficients that need to be received is K. Therefore, in a process of receiving the crosstalk coefficients, the cancellation module may detect, in real time, whether the crosstalk coefficients of the K ports have been normally received. The cancellation module may send the stop instruction to the computing center after determining that the crosstalk coefficients of all the K ports are received. If the cancellation module detects that crosstalk coefficients of some ports in the K ports are not normally received after the computing center sends one round of crosstalk coefficients of all the K ports, the cancellation module does not send the stop instruction to the computing center. In this case, the computing center may successively deliver the crosstalk coefficients of the K ports to the cancellation module again, until the stop instruction sent by the cancellation module is received. In a process of sending the crosstalk coefficients by using the cyclic sending method, a quantity of messages exchanged between the cancellation module and the computing center is relatively small, and efficiency of delivering the crosstalk coefficients can be improved.

Step 209: The cancellation module preprocesses crosstalk signals of the K ports based on the received crosstalk coefficients.

In this embodiment of the present invention, because the J cancellers in the cancellation module actually receive the packets that are sent by the status control unit and in which the crosstalk coefficients are encapsulated, the cancellation module may decapsulate the received packets based on the preset packet structure, so as to obtain the crosstalk coefficients encapsulated in the packets. Then, the cancellation module may preprocess the received K crosstalk signals based on the crosstalk coefficients. Specifically, referring to FIG. 3-3, a process in which the cancellation module preprocesses the crosstalk signals may specifically include the following steps.

Step 2091: The cancellation module drives each of the J cancellers to send a received at least one crosstalk signal to each of the other (J-1) cancellers.

In this embodiment of the present invention, each of the J cancellers is connected to at least one port, and can receive crosstalk signals from at least one channel through the at least one port. When J is greater than 1, the at least one crosstalk signal is interfered with by crosstalk signals received by the other (J-1) cancellers. Therefore, to enable each canceller to preprocess the received at least one crosstalk signal, when J is greater than 1, the cancellation module may further drive each canceller to send the received at least one crosstalk signal to each of the other (J-1) cancellers. Therefore, each canceller may further receive the crosstalk signals sent by the other (J-1) cancellers. The $j^{th}$ canceller may receive $K_j$ crosstalk signals through $K_j$ ports. Therefore, the $j^{th}$ canceller may send the $K_j$ crosstalk signals to each of the other (J-1) cancellers through the third network interfaces, and receive a total of $(K-K_j)$ crosstalk signals sent by the other (J-1) cancellers. Therefore, each canceller can receive a total of K crosstalk signals. In addition, when J is equal to 1, the canceller can directly preprocess the received crosstalk signal.

For example, for the cancellation module shown in FIG. 2-1, the cancellation module may drive the canceller 1 to send the received 16 crosstalk signals to each of the cancellers 2 to 4. Likewise, the canceller 1 may receive a total of 48 crosstalk signals sent by the cancellers 2 to 4.

Step 2092: The cancellation module drives each canceller to preprocess the at least one crosstalk signal based on the received crosstalk coefficients and crosstalk signals sent by the other (J-1) cancellers.

It can be learned from the foregoing step 206 and step 207 that the $j^{th}$ group of crosstalk sub-coefficients received by the $j^{th}$ canceller includes the crosstalk coefficients of $K_j$ ports. Crosstalk coefficients of each port include K coefficients. Therefore, the cancellation module may drive each canceller to respectively multiply the received K crosstalk signals by K corresponding coefficients of each port, and then add the obtained K products together to obtain one preprocessed signal. After preprocessing the received $K_j$ crosstalk signals, the $j^{th}$ canceller may obtain $K_j$ preprocessed signals.

For example, it is assumed that crosstalk sub-coefficients received by the canceller 1 is H1, and H1 is a $16 \times 64$ matrix. After the canceller 1 receives crosstalk signals of 16 channels through 16 ports, and receives, through Ethernet interfaces, 48 crosstalk signals sent by the other three cancellers, the canceller 1 may respectively multiply the 64 crosstalk signals by corresponding coefficients in each row of H1, and then add the products together, to finally obtain 16 preprocessed signals.

It can be learned from the foregoing analysis that, when a quantity of ports at an access layer in the DSL system increases, according to the crosstalk cancellation method provided in this embodiment of the present invention, a processing capability of the crosstalk cancellation apparatus can be expanded by directly increasing a quantity of cancellers in the cancellation module. For example, if it is assumed that there are originally 48 signal transceiver ports on the central office device, three cancellers with a specification of $16 \times 64$ may be configured in the cancellation module to preprocess crosstalk signals of the 48 ports. When a quantity of ports on the central office device is increased to 64, one canceller with a specification of $16 \times 64$ may be added to the cancellation module, to implement preprocessing on crosstalk signals of the 64 ports. Therefore, during expansion of the processing capability of the crosstalk cancellation apparatus, there is no need to customize a new chip, and expansion is relatively simple. Therefore, flexibility of using the crosstalk cancellation apparatus is greatly improved.

It should be noted that a sequence of steps of the crosstalk cancellation method provided in this embodiment of the present invention may be appropriately adjusted, or steps may be correspondingly increased or decreased based on a situation. For example, step 206 may be deleted based on a situation. Any variation method readily figured out by a person skilled in the art within the technical scope disclosed in the present invention shall fall within the protection scope of this application, and therefore, details are not described herein.

In conclusion, this embodiment of the present invention provides a crosstalk cancellation method. In the method, the computing center deployed at a remote end may calculate the crosstalk coefficient based on the status parameter and the channel physical parameter that are reported by the baseband chip, and may deliver the crosstalk coefficient to the cancellation module deployed at an operator end. Because a calculation capability of the computing center and a cancellation capability of the cancellation module can be flexibly expanded, the crosstalk cancellation method provided in this embodiment of the present invention can be used to perform crosstalk cancellation processing for central office devices with different port quantities, and the crosstalk cancellation method has relatively high flexibility.

In addition, for convenience and brevity of description, for specific working processes of the apparatus, the module, and the unit shown in FIG. 1, FIG. 2-1, and FIG. 2-2, refer to corresponding processes in the embodiments shown in FIG. 3-1A to FIG. 3-3, and details are not described herein again.

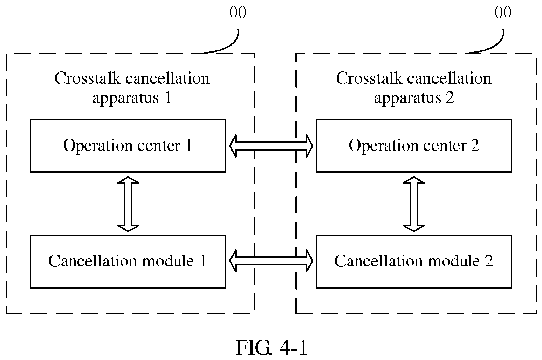

FIG. 4-1 is a schematic structural diagram of a crosstalk cancellation system according to an embodiment of the present invention. As shown in FIG. 4-1, the crosstalk cancellation system may include M cascaded crosstalk cancellation apparatuses shown in FIG. 2-1 or FIG. 2-2, where M is an integer greater than 1.

Computing centers in any two crosstalk cancellation apparatuses 00 are connected through a fourth network interface. The fourth network interface may be an Ethernet interface. A computing center in each crosstalk cancellation apparatus 00 is further configured to send a received channel physical parameter to each computing center in the other (M-1) crosstalk cancellation apparatuses through the fourth network interfaces.

Cancellation modules in any two crosstalk cancellation apparatuses 00 are connected through a third network interface. A cancellation module in each crosstalk cancellation apparatus 00 is further configured to send a received crosstalk signal to each cancellation module in the other (M-1) crosstalk cancellation apparatuses 00 through the third network interface.

In a scenario in which a plurality of crosstalk cancellation apparatuses are cascaded, cancellation modules in the crosstalk cancellation apparatuses may be deployed in different central office devices, and computing centers in the crosstalk cancellation apparatuses may be deployed in different central office servers, or may be all deployed in a cloud server. Further, one master crosstalk cancellation apparatus may be determined from at least two crosstalk cancellation apparatuses, and the other crosstalk cancellation apparatuses are used as slave crosstalk cancellation apparatuses. The master crosstalk cancellation apparatus controls signal interaction between the crosstalk cancellation apparatuses.

For example, as shown in FIG. 4-1, it is assumed that the crosstalk cancellation system includes two crosstalk cancellation apparatuses: a crosstalk cancellation apparatus 1 and a crosstalk cancellation apparatus 2. The crosstalk cancellation apparatus 1 is a master crosstalk cancellation apparatus, the crosstalk cancellation apparatus 2 is a slave crosstalk cancellation apparatus, a computing center 1 in the crosstalk cancellation apparatus 1 is connected to a computing center 2 in the crosstalk cancellation apparatus 2 through a fourth network interface, and a cancellation module 1 in the crosstalk cancellation apparatus 1 is connected to a cancellation module 2 in the crosstalk cancellation apparatus 2 through a third network interface.

In conclusion, this embodiment of the present invention provides a crosstalk cancellation system. The system may include a plurality of cascaded crosstalk cancellation apparatuses, and the crosstalk cancellation system has a higher crosstalk cancellation capability. In addition, because the cancellation modules in the crosstalk cancellation apparatuses may be deployed in different central office devices, crosstalk signals between different central office devices can be preprocessed by using the crosstalk cancellation system. This further improves a crosstalk signal processing effect.

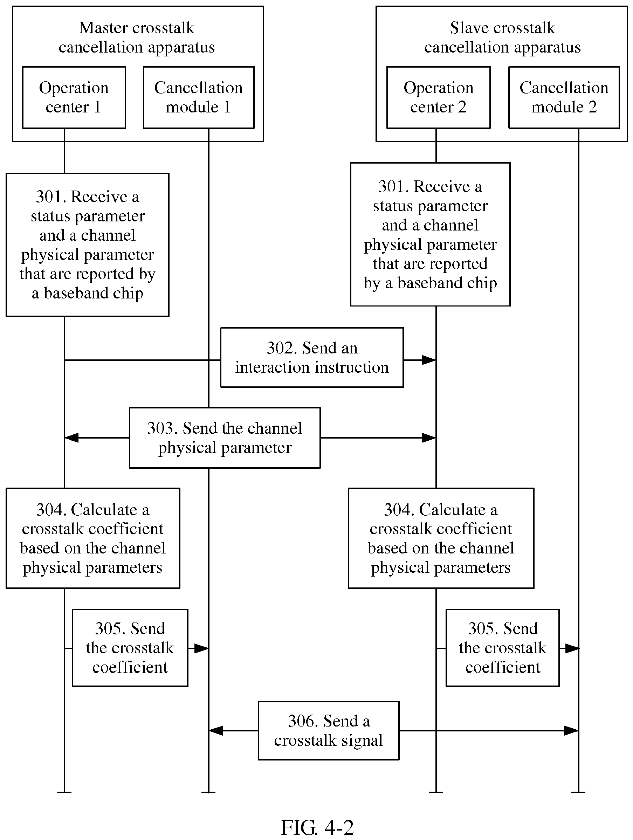

An embodiment of the present invention provides another crosstalk cancellation method. The method may be applied to the system shown in FIG. 4-1. Referring to FIG. 4-2, the method may include the following steps.

Step 301: Each crosstalk cancellation apparatus receives a status parameter and a channel physical parameter that are reported by a baseband chip.

A computing center in each crosstalk cancellation apparatus may receive, through a second network interface, the status parameter and the channel physical parameter that are reported by the baseband chip. For a specific process of receiving the status parameter and the channel physical parameter, refer to the foregoing step 202 to step 204. Details are not described again in this embodiment of the present invention.

Step 302: A computing center in a master crosstalk cancellation apparatus sends an interaction instruction to each computing center in the other slave crosstalk cancellation apparatuses.

In this embodiment of the present invention, after receiving the channel physical parameter reported by the baseband chip, the computing center of the main control crosstalk cancellation apparatus may send the interaction instruction to the each computing center in the other slave crosstalk cancellation apparatuses through fourth network interfaces. The interaction instruction is used to instruct the crosstalk cancellation apparatuses to send channel physical parameters to each other.

Step 303: The computing center in each control crosstalk cancellation apparatus sends the channel physical parameter to each computing center of the other crosstalk cancellation apparatuses.

After receiving the interaction instruction, the computing centers in the slave crosstalk cancellation apparatuses may send the received channel physical parameters to each computing center in the other crosstalk cancellation apparatuses through the fourth network interfaces. Likewise, the computing center in the master crosstalk cancellation apparatus may also send, through the fourth network interface to each computing center in the other slave crosstalk cancellation apparatuses, the channel physical parameter received through the second network interface.

It should be noted that, in actual application, the foregoing step 301 to step 303 may alternatively be implemented in another manner: When delivering a channel physical parameter obtaining request to the baseband chip corresponding to the master crosstalk cancellation apparatus, the master crosstalk cancellation apparatus may further add the interaction instruction to the channel physical parameter obtaining request, and send the channel physical parameter obtaining request that carries the interaction instruction to each of the other slave crosstalk cancellation apparatuses. A computing center in a slave crosstalk cancellation apparatus may deliver, based on the channel physical parameter obtaining request, a channel physical parameter obtaining request to a baseband chip corresponding to the apparatus. After receiving the channel physical parameters reported by the baseband chips, the computing centers in the crosstalk cancellation apparatuses may forward the channel physical parameters to each other.

Step 304: The computing center in each crosstalk cancellation apparatus calculates a crosstalk coefficient based on the channel physical parameters.

After receiving channel physical parameters sent by the other crosstalk cancellation apparatuses, the computing center in each crosstalk cancellation apparatus may calculate the crosstalk coefficient based on the channel physical parameters. For a specific process of calculating the crosstalk coefficient, refer to the foregoing step 205, and details are not described again in this embodiment of the present invention.

Step 305: The computing center in each crosstalk cancellation apparatus delivers the crosstalk coefficient to a cancellation module.

For a specific process of delivering the crosstalk coefficient, refer to step 206 and step 207.

Step 306: A cancellation module in each crosstalk cancellation apparatus sends a crosstalk signal to each cancellation module in the other crosstalk cancellation apparatuses.

After receiving the crosstalk coefficient delivered by the computing center, the cancellation module in each crosstalk cancellation apparatus further needs to send the crosstalk signal received by the module to each cancellation module in the other crosstalk cancellation apparatuses, and receive crosstalk signals sent by the cancellation modules in the other crosstalk cancellation apparatuses. In this way, each cancellation module can preprocess the crosstalk signal of the module based on the crosstalk coefficient and the crosstalk signals sent by the other cancellation modules. For a specific preprocessing process, refer to the foregoing step 209, and details are not described again in this embodiment of the present invention.

In conclusion, this embodiment of the present invention provides a crosstalk cancellation method, and the method can be used to preprocess crosstalk signals between a plurality of central office devices. This further improves a crosstalk signal processing effect.

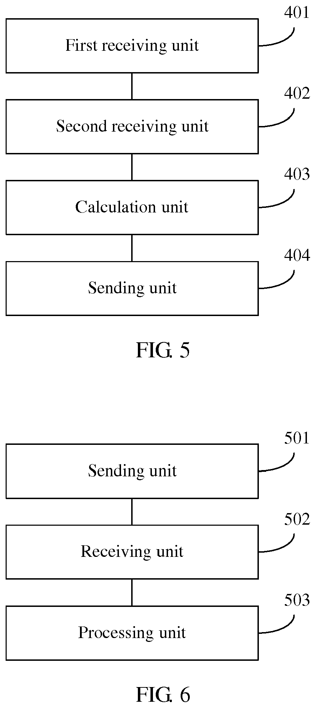

FIG. 5 is a schematic structural diagram of a computing center according to an embodiment of the present invention. Referring to FIG. 5, the computing center may include:

a first receiving unit 401, configured to receive, through a first network interface, port information reported by a cancellation module, where the cancellation module includes L cancellers, the port information includes an identifier of a port connected to each of the L cancellers, and L is a positive integer;
a second receiving unit 402, configured to receive, through a second network interface, a status parameter and a channel physical parameter that are reported by a baseband chip;
a calculation unit 403, configured to perform a method shown in the foregoing step 205; and
a sending unit 404, configured to deliver the crosstalk coefficient to a corresponding canceller in the cancellation module based on the port information.

The calculation unit 403 is specifically configured to: determine a total quantity K of ports that are currently online based on the status parameter; and
calculate crosstalk coefficients of the K ports based on the status parameter and the channel physical parameter.

The sending unit 404 is specifically configured to send, based on the port information, the crosstalk coefficients of the K ports to a canceller connected to the K ports.

Optionally, the sending unit 404 is specifically configured to perform methods shown in the foregoing step 2071 to step 2073.

Optionally, the sending unit 404 is specifically configured to: perform packet encapsulation on crosstalk coefficients of each port in the K ports, and send encapsulated packets to the canceller connected to the K ports.

Optionally, the second receiving unit 402 is specifically configured to:

receive, through the second network interface, the status parameter reported by the baseband chip;
deliver a channel physical parameter obtaining request to the baseband chip; and
receive the channel physical parameter that is reported by the baseband chip based on the channel physical parameter obtaining request.

In conclusion, this embodiment of the present invention provides a computing center. The computing center may perform signal interaction with the cancellation module and the baseband chip that are deployed in different physical locations, calculate the crosstalk coefficient based on the channel physical parameter reported by the baseband chip, and deliver the crosstalk coefficient to the cancellation module. When a signal transceiver capacity of a central office device increases, an operation scale of the computing center can be expanded by allocating more computing resources to the computing center. In the expansion method, there is no need to customize a new chip, and expansion is relatively simple. Therefore, crosstalk cancellation processing can be flexibly performed for central office devices with different port quantities.

FIG. 6 is a schematic structural diagram of a cancellation module according to an embodiment of the present invention. Referring to FIG. 6, the cancellation module may include:

a sending unit 501, configured to perform a method shown in the foregoing step 201;
a receiving unit 502, configured to receive, by using J cancellers, crosstalk coefficients of K ports delivered by the computing center, where the J cancellers are connected to the K ports, and J is a positive integer less than or equal to L; and
a processing unit 503, configured to drive each of the J cancellers to preprocess at least one received crosstalk signal based on the crosstalk coefficients.

Optionally, the processing unit 503 is specifically configured to perform methods shown in the foregoing step 2091 and step 2092.

Optionally, the receiving unit 502 is specifically configured to:
receive a coefficient configuration instruction delivered by the computing center, where the coefficient configuration instruction is used to indicate that a quantity of ports corresponding to the to-be-sent crosstalk coefficients is K; send a response instruction to the computing center; and receive, by using the J cancellers, crosstalk coefficients of each port in the K ports that are cyclically delivered by the computing center; and after determining that the crosstalk coefficients of all the K ports are received, send a stop instruction to the computing center.

Optionally, the receiving unit 502 is specifically configured to: receive, by using the J cancellers, encapsulated packets sent by the computing center; and decapsulate the packets to obtain the crosstalk coefficients of the K ports.

In conclusion, this embodiment of the present invention provides a cancellation module. The cancellation module includes at least one canceller, and the cancellation module can perform signal interaction with the computing center deployed in a different physical location, and can preprocess the received crosstalk signal based on the crosstalk coefficients delivered by the computing center. When a signal transceiver capacity of a central office device increases, a cancellation scale of the cancellation module can be expanded by increasing a quantity of cancellers in the cancellation module. In the expansion method, there is no need to customize a new chip, and expansion is relatively simple. Therefore, crosstalk cancellation processing can be flexibly performed for central office devices with different port quantities.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

**Claims**

1. A crosstalk cancellation apparatus, wherein the apparatus comprises:

a computing center (2) and a cancellation module (3) that are deployed in different physical locations, wherein the cancellation module (3) comprises L cancellers, and L is a positive integer;
the computing center (2) is connected to the cancellation module (3) through a first network interface, and is connected to a baseband chip (1) through a second network interface;
the computing center (2) is configured to: calculate a crosstalk coefficient wherein the crosstalk coefficient is a matrix used to cancel crosstalk based on a status parameter and a channel physical parameter that are reported by the baseband chip (1), wherein the status parameter is used to indicate a status of each port in current online ports of the baseband chip (1) and deliver the crosstalk coefficient to the cancellers in the cancellation module (3) through the first network interface; and
each canceller in the cancellation module (3) is connected to at least one port of the baseband chip (1), each port of the baseband chip (1) being connected to a CPE, and each canceller is configured to preprocess, based on the crosstalk coefficient, a crosstalk signal received through the at least one port; wherein:

L is an integer greater than 1, and any two of the L cancellers are connected to each other through a third network interface;

an $i^{th}$ canceller in the L cancellers is connected to $N_i$ ports of the baseband chip (1), i is a positive integer less than or equal to L, and $N_i$ is a positive integer; and

the $i^{th}$ canceller is configured to: receive $N_i$ crosstalk signals through the $N_i$ ports, send the received $N_i$ crosstalk signals to each of the other L-1 cancellers through the third network interface, and preprocess the $N_i$ crosstalk signals based on the crosstalk coefficient and crosstalk signals sent by the other L-1 cancellers.

2. The crosstalk cancellation apparatus according to claim 1, wherein
the computing center (2) is deployed in a cloud server or a central office server, and the cancellation module (3) is deployed in a central office device.

3. The crosstalk cancellation apparatus according to claim 1, wherein the computing center (2) comprises a status control unit and at least one coefficient calculation unit;
the status control unit is configured to: receive the status parameter and the channel physical parameter that are reported by the baseband chip (1), and determine a crosstalk coefficient calculation model based on the status parameter; and
each coefficient calculation unit is configured to perform calculation on the channel physical parameter based on the crosstalk coefficient calculation model under an instruction of the status control unit, to obtain crosstalk coefficients of a plurality of ports or a plurality of subcarriers.

4. The crosstalk cancellation apparatus according to claim 1, wherein
the first network interface, the second network interface, and the third network interface are all Ethernet interfaces.

5. A crosstalk cancellation method, wherein the method comprises:

receiving (201), by a computing center (2) through a first network interface, port information reported by a cancellation module (3), wherein the cancellation module (3) comprises L cancellers, the port information comprises an identifier of a port connected to each of the L cancellers, and L is a positive integer;
receiving, by the computing center (2) through a second network interface, a status parameter and a channel physical parameter that are reported by a baseband chip (1) wherein the status parameter is used to indicate a status of each port in current online ports of the baseband chip (1); each canceller in the cancellation module (3) is connected to at least one port of the baseband chip (1), each port of the baseband chip (1) being connected to a CPE;
calculating (205), by the computing center, a crosstalk coefficient based on the status parameter and the channel physical parameter, wherein the crosstalk coefficient is a matrix used to cancel crosstalk; and
delivering, by the computing center, the crosstalk coefficient to a corresponding canceller in the cancellation module (3) based on the port information;
wherein:

L is an integer greater than 1, and any two of the L cancellers are connected to each other through a third network interface;
an $i^{th}$ canceller in the L cancellers is connected to $N_i$ ports of the baseband chip (1), i is a positive integer less than or equal to L, and $N_i$ is a positive integer; and
the $i^{th}$ canceller is configured to: receive $N_i$ crosstalk signals through the $N_i$ ports, send the received $N_i$ crosstalk signals to each of the other L-1 cancellers through the third network interface, and preprocess the $N_i$ crosstalk signals based on the crosstalk coefficient and crosstalk signals sent by the other L-1 cancellers.

6. The method according to claim 5, wherein the calculating, by the computing center, a crosstalk coefficient based on the status parameter and the channel physical parameter comprises:

determining, by the computing center (2) based on the status parameter, a total quantity K of ports that are currently online; and
calculating, by the computing center, crosstalk coefficients of the K ports based on the status parameter and the channel physical parameter; and
the delivering, by the computing center, the crosstalk coefficient to a corresponding canceller in the cancellation module (3) based on the port information comprises:
delivering, by the computing center (2) based on the port information, the crosstalk coefficients of the K ports to a canceller connected to the K ports.

7. The method according to claim 6, wherein the delivering, by the computing center (2) based on the port information, the crosstalk coefficients of the K ports to a canceller connected to the K ports comprises:

delivering, by the computing center, a coefficient configuration instruction to the cancellation module (3), wherein the coefficient configuration instruction is used to indicate that a quantity of ports corresponding to the to-be-sent crosstalk coefficients is K; and
after receiving a response instruction sent by the cancellation module (3), cyclically delivering, by the computing center (2) through the first network interface, crosstalk coefficients of each port in the K ports to the canceller connected to the K ports, until a stop instruction sent by the cancellation module (3) is received, wherein the stop instruction is sent by the cancellation module (3) after the cancellation module (3) determines that the crosstalk coefficients of all the K ports are received.

8. The method according to claim 6, wherein the delivering, by the computing center based on the port information, the crosstalk coefficients of the K ports to a canceller connected to the K ports comprises:

performing, by the computing center, packet encapsulation on crosstalk coefficients of each port in the K ports; and
sending, by the computing center, encapsulated packets to the canceller connected to the K ports.

9. The method according to any one of claims 5 to 8, wherein the receiving, by the computing center (2) through a second network interface, a status parameter and a channel physical parameter that are reported by a baseband chip (1) comprises:

receiving, by the computing center (2) through the second network interface, the status parameter reported by the baseband chip (1);
delivering, by the computing center, a channel physical parameter obtaining request to the baseband chip (1); and
receiving, by the computing center, the channel physical parameter that is reported by the baseband chip (1) based on the channel physical parameter obtaining request.

10. A crosstalk cancellation method, wherein the method comprises:

reporting, by a cancellation module (3) through a first network interface, port information to a computing center, wherein the cancellation module (3) comprises L cancellers, the port information comprises an identifier of a port connected to each of the L cancellers, and L is a positive integer;
receiving, by the cancellation module (3) by using cancellers of said L cancellers, crosstalk coefficients of K ports delivered by the computing center, wherein the J cancellers are connected to the K ports, and J is a positive integer less than or equal to L; and
driving, by the cancellation module (3), each of the J cancellers to preprocess at least one received crosstalk signal based on the crosstalk coefficients;
wherein:

L is an integer greater than 1, and any two of the L cancellers are connected to each other through a third network interface;
an ith canceller in the L cancellers is connected to Ni ports, i is a positive integer less than or equal to L, and Ni is a positive integer; and
the ith canceller is configured to: receive Ni crosstalk signals through the Ni ports, send the received Ni crosstalk signals to each of the other L-1 cancellers through the third network interface, and preprocess the Ni crosstalk signals based on the crosstalk coefficient and crosstalk signals sent by the other L-1 cancellers..

11. The method according to claim 10, wherein the driving, by the cancellation module (3), each of the J cancellers to preprocess at least one received crosstalk signal based on the crosstalk coefficients comprises:

when J is greater than 1, driving, by the cancellation module (3), each of the J cancellers to send the received at least one crosstalk signal to each of the other J-1 cancellers; and
driving, by the cancellation module (3), each canceller to preprocess the at least one crosstalk signal based on the crosstalk coefficients and crosstalk signals sent by the other J-1 cancellers.

12. The method according to claim 10, wherein the receiving, by the cancellation module (3) by using J cancellers, crosstalk coefficients of K ports delivered by the computing center (2) comprises:

receiving, by the cancellation module (3), a coefficient configuration instruction delivered by the computing center, wherein the coefficient configuration instruction is used to indicate that a quantity of ports corresponding to the to-be-sent crosstalk coefficients is K;
sending, by the cancellation module (3), a response instruction to the computing center;
receiving, by the cancellation module (3) by using the J cancellers, crosstalk coefficients of each port in the K ports that are cyclically delivered by the computing center; and
sending, by the cancellation module (3), a stop instruction to the computing center (2) after determining that the crosstalk coefficients of all the K ports are received.

13. The method according to any one of claims 10 to 12, wherein the receiving, by the cancellation module (3) by using J cancellers, crosstalk coefficients of K ports delivered by the computing center (2) comprises:

receiving, by the cancellation module (3) by using the J cancellers, encapsulated packets sent by the computing center; and
decapsulating, by the cancellation module (3), the packets to obtain the crosstalk coefficients of the K ports.

**Patentansprüche**

1. Einrichtung zum Unterdrücken eines Übersprechens, wobei die Einrichtung Folgendes umfasst:

ein Rechenzentrum (2) und ein Unterdrückungsmodul (3), die an verschiedenen physikalischen Orten eingesetzt sind, wobei das Unterdrückungsmodul (3) L Unterdrücker umfasst und L eine positive ganze Zahl ist;
das Rechenzentrum (2) über eine erste Netzwerkschnittstelle mit dem Unterdrückungsmodul (3) verbunden ist und über eine zweite Netzwerkschnittstelle mit einem Basisbandchip (1) verbunden ist;
das Rechenzentrum (2) für Folgendes konfiguriert ist: Berechnen eines Übersprechkoeffizienten, wobei der Übersprechkoeffizient eine Matrix ist, die verwendet wird, um ein Übersprechen, basierend auf einem Statusparameter und einem physikalischen Kanalparameter, die durch den Basisbandchip (1) gemeldet werden, zu unterdrücken, wobei der Statusparameter verwendet wird, um einen Status jedes Ports in aktuellen Online-Ports des Basisbandchips (1) anzuzeigen und den Übersprechkoeffizienten über die erste Netzwerkschnittstelle an die Unterdrücker in dem Unterdrückungsmodul (3) zu liefern; und
jeder Unterdrücker in dem Unterdrückungsmodul (3) mit wenigstens einem Port des Basisbandchips (1) verbunden ist, wobei jeder Port des Basisbandchips (1) mit einer CPE verbunden ist, und jeder Unterdrücker konfiguriert ist, um basierend auf dem Übersprechkoeffizienten ein Übersprechsignal, das über den wenigstens einen Port empfangen wird, vorzuverarbeiten;
wobei:

L eine ganze Zahl über 1 ist, und beliebige zwei der L Unterdrücker über eine dritte Netzwerkschnittstelle miteinander verbunden sind;
ein i-ter Unterdrücker in den L Unterdrückern mit $N_i$ Ports des Basisbandchips (1) verbunden ist, i eine positive ganze Zahl ist, die höchstens L ist, und $N_i$ eine positive ganze Zahl ist; und
der i-te Unterdrücker für Folgendes konfiguriert ist:
Empfangen von $N_i$ Übersprechsignalen über die $N_i$ Ports, Senden der empfangenen $N_i$ Übersprechsignale an jeden der anderen L-1 Unterdrücker über die dritte Netzwerkschnittstelle und Vorverarbeiten der $N_i$ Übersprechsignale basierend auf dem Übersprechkoeffizienten und den durch die anderen L-1 Unterdrücker gesendeten Übersprechsignalen.

2. Übersprechunterdrückungseinrichtung nach Anspruch 1, wobei
das Rechenzentrum (2) in einem Cloud-Server oder einem Vermittlungsstellenserver eingesetzt wird und das Unterdrückungsmodul (3) in einer Vermittlungsstellenvorrichtung eingesetzt wird.

**3.** Übersprechunterdrückungseinrichtung nach Anspruch 1, wobei das Rechenzentrum (2) eine Statussteuereinheit und wenigstens eine Koeffizientenberechnungseinheit umfasst;
die Statussteuereinheit für Folgendes konfiguriert ist:

Empfangen des Statusparameters und des physikalischen Kanalparameters, die durch den Basisbandchip (1) gemeldet werden, und Bestimmen eines Modells zum Berechnen des Übersprechkoeffizienten basierend auf dem Statusparameter; und
jede Koeffizientenberechnungseinheit konfiguriert ist, um eine Berechnung des physikalischen Kanalparameters basierend auf dem Modell zum Berechnen des Übersprechkoeffizienten unter einer Anweisung der Statussteuereinheit durchzuführen, um Übersprechkoeffizienten von mehreren Ports oder mehreren Hilfsträgern zu erhalten.

**4.** Übersprechunterdrückungseinrichtung nach Anspruch 1, wobei
die erste Netzwerkschnittstelle, die zweite Netzwerkschnittstelle und die dritte Netzwerkschnittstelle alle Ethernet-Schnittstellen sind.

**5.** Übersprechunterdrückungsverfahren, wobei das Verfahren Folgendes umfasst:

Empfangen (201), durch ein Rechenzentrum (2), über eine erste Netzwerkschnittstelle, von Port-Informationen, die durch ein Unterdrückungsmodul (3) gemeldet werden, wobei das Unterdrückungsmodul (3) L Unterdrücker umfasst, die Port-Informationen einen Bezeichner eines Ports, der mit jedem der L Unterdrücker verbunden ist, umfassen, und L eine positive ganze Zahl ist;
Empfangen, durch das Rechenzentrum (2), über eine zweite Netzwerkschnittstelle, eines Statusparameters und eines physikalischen Kanalparameters, die durch einen Basisbandchip (1) gemeldet werden, wobei der Statusparameter verwendet wird, um einen Status jedes Ports in aktuellen Online-Ports des Basisbandchips (1) anzuzeigen;
jeder Unterdrücker in dem Unterdrückungsmodul (3) mit wenigstens einem Port des Basisbandchips (1) verbunden ist, wobei jeder Port des Basisbandchips (1) mit einer CPE verbunden ist;
Berechnen (205), durch das Rechenzentrum, eines Übersprechkoeffizienten basierend auf dem Statusparameter und dem physikalischer Kanalparameter, wobei der Übersprechkoeffizient eine Matrix ist, die verwendet wird, um ein Übersprechen zu unterdrücken; und
Liefern, durch das Rechenzentrum, des Übersprechkoeffizienten an einen entsprechenden Unterdrücker in dem Unterdrückungsmodul (3) basierend auf den Port-Informationen;
wobei:

L eine ganze Zahl über 1 ist, und beliebige zwei der L Unterdrücker über eine dritte Netzwerkschnittstelle miteinander verbunden sind;
ein i-ter Unterdrücker in den L Unterdrückern mit $N_i$ Ports des Basisbandchips (1) verbunden ist, i eine positive ganze Zahl ist, die höchstens L ist, und $N_i$ eine positive ganze Zahl ist; und
der i-te Unterdrücker für Folgendes konfiguriert ist:
Empfangen von $N_i$ Übersprechsignalen über die $N_i$ Ports, Senden der empfangenen $N_i$ Übersprechsignale an jeden der anderen L-1 Unterdrücker über die dritte Netzwerkschnittstelle und Vorverarbeiten der $N_i$ Übersprechsignale basierend auf dem Übersprechkoeffizienten und den durch die anderen L-1 Unterdrücker gesendeten Übersprechsignalen.

**6.** Verfahren nach Anspruch 5, wobei das Berechnen, durch das Rechenzentrum, eines Übersprechkoeffizienten basierend auf dem Statusparameter und dem physikalischen Kanalparameter Folgendes umfasst:

Bestimmen, durch das Rechenzentrum (2), einer Gesamtanzahl K von Ports, die aktuell online sind, basierend auf dem Statusparameter; und
Berechnen, durch das Rechenzentrum, von Übersprechkoeffizienten der K Ports basierend auf dem Statusparameter und dem physikalischen Kanalparameter; und
wobei das Liefern, durch das Rechenzentrum, des Übersprechkoeffizienten an einen entsprechenden Unterdrücker in dem Unterdrückungsmodul (3) basierend auf den Port-Informationen Folgendes umfasst:
Liefern, durch das Rechenzentrum (2), der Übersprechkoeffizienten der K Ports an einen Unterdrücker, der mit den K Ports verbunden ist, basierend auf den Port-Informationen.

**7.** Verfahren nach Anspruch 6, wobei das Liefern, durch das Rechenzentrum (2), der Übersprechkoeffizienten der K Ports an einen Unterdrücker, der mit den K Ports verbunden ist, basierend auf den Port-Informationen, Folgendes umfasst:

> Liefern, durch das Rechenzentrum, einer Koeffizientenkonfigurationsanweisung an das Unterdrückungsmodul (3), wobei die Koeffizientenkonfigurationsanweisung verwendet wird, um anzuzeigen, dass eine Anzahl von Ports, die den zu sendenden Übersprechkoeffizienten entsprechen, K ist; und
> nach dem Empfangen einer Antwortanweisung, die durch das Unterdrückungsmodul (3) gesendet wird, zyklisches Liefern, durch das Rechenzentrum (2), über die erste Netzwerkschnittstelle, von Übersprechkoeffizienten jedes Ports in den K Ports an den Unterdrücker, der mit den K Ports verbunden ist, bis eine Stoppanweisung, die durch das Unterdrückungsmodul (3) gesendet wird, empfangen wird, wobei die Stoppanweisung durch das Unterdrückungsmodul (3) gesendet wird, nachdem das Unterdrückungsmodul (3) bestimmt, dass die Übersprechkoeffizienten all der K Ports empfangen wurden.

8. Verfahren nach Anspruch 6, wobei das Liefern, durch das Rechenzentrum, der Übersprechkoeffizienten der K Ports an einen Unterdrücker, der mit den K Ports verbunden ist, basierend auf den Port-Informationen, Folgendes umfasst:

> Durchführen, durch das Rechenzentrum, einer Datenpaketeinkapselung an Übersprechkoeffizienten jedes Ports in den K Ports; und
> Senden, durch das Rechenzentrum, von eingekapselten Datenpaketen an den Unterdrücker, der mit den K Ports verbunden ist.

9. Verfahren nach einem der Ansprüche 5 bis 8, wobei das Empfangen, durch das Rechenzentrum (2), über eine zweite Netzwerkschnittstelle, eines Statusparameters und eines physikalischen Kanalparameters, die durch einen Basisbandchip (1) gemeldet werden, Folgendes umfasst:

> Empfangen, durch das Rechenzentrum (2), über die zweite Netzwerkschnittstelle, des Statusparameters, der durch den Basisbandchip (1) gemeldet wird;
> Liefern, durch das Rechenzentrum, einer Anforderung, einen physikalischen Kanalparameter zu erhalten, an den Basisbandchip (1); und
> Empfangen, durch das Rechenzentrum, des physikalischen Kanalparameters, der durch den Basisbandchip (1) basierend auf der Anforderung, einen physikalischen Kanalparameter zu erhalten, gemeldet wird.

10. Übersprechunterdrückungsverfahren, wobei das Verfahren Folgendes umfasst:

> Melden, durch ein Unterdrückungsmodul (3), über eine erste Netzwerkschnittstelle, von Port-Informationen an ein Rechenzentrum, wobei das Unterdrückungsmodul (3) L Unterdrücker umfasst, die Port-Informationen einen Bezeichner eines Ports, der mit jedem der L Unterdrücker verbunden ist, umfassen, und L eine positive ganze Zahl ist;
> Empfangen, durch das Unterdrückungsmodul (3), durch Verwenden von J Unterdrückern der L Unterdrücker, von Übersprechkoeffizienten von K Ports, die durch das Rechenzentrum geliefert werden, wobei die J Unterdrücker mit den K-Ports verbunden sind und J eine positive ganze Zahl ist, die höchstens L ist; und
> Antreiben, durch das Unterdrückungsmodul (3), jedes der J Unterdrücker, um wenigstens ein empfangenes Übersprechsignal basierend auf den Übersprechkoeffizienten vorzuverarbeiten;
> wobei:

>> L eine ganze Zahl über 1 ist, und beliebige zwei der L Unterdrücker über eine dritte Netzwerkschnittstelle miteinander verbunden sind;
>> ein i-ter Unterdrücker in den L Unterdrückern mit $N_i$ Ports verbunden ist, i eine positive ganze Zahl ist, die höchstens L ist, und $N_i$ eine positive ganze Zahl ist; und
>> der i-te Unterdrücker für Folgendes konfiguriert ist:
>> Empfangen von $N_i$ Übersprechsignalen über die $N_i$ Ports, Senden der empfangenen $N_i$ Übersprechsignale an jeden der anderen L-1 Unterdrücker über die dritte Netzwerkschnittstelle und Vorverarbeiten der $N_i$ Übersprechsignale basierend auf dem Übersprechkoeffizienten und den durch die anderen L-1 Unterdrücker gesendeten Übersprechsignalen.

11. Verfahren nach Anspruch 10, wobei das Antreiben, durch das Unterdrückungsmodul (3), jedes der J Unterdrücker, um wenigstens ein empfangenes Übersprechsignal basierend auf den Übersprechkoeffizienten vorzuverarbeiten, Folgendes umfasst:

wenn J über 1 ist, Antreiben, durch das Unterdrückungsmodul (3), jedes der J Unterdrücker, um das empfangene wenigstens eine Übersprechsignal an jeden der anderen J-1 Unterdrücker zu senden; und

Antreiben, durch das Unterdrückungsmodul (3), jedes Unterdrückers, um das wenigstens eine Übersprechsignal basierend auf den Übersprechkoeffizienten und Übersprechsignale, die durch die anderen J-1 Unterdrücker gesendet wurden, vorzuverarbeiten.

12. Verfahren nach Anspruch 10, wobei das Empfangen, durch das Unterdrückungsmodul (3), durch Verwenden von J Unterdrückern, von Übersprechkoeffizienten von K Ports, die durch das Rechenzentrum (2) geliefert werden, Folgendes umfasst:

Empfangen, durch das Unterdrückungsmodul (3), einer Koeffizientenkonfigurationsanweisung, die durch das Rechenzentrum geliefert wird, wobei die Koeffizientenkonfigurationsanweisung verwendet wird, um anzuzeigen, dass eine Anzahl von Ports, die den zu sendenden Übersprechkoeffizienten entsprechen, K ist;
Senden, durch das Unterdrückungsmodul (3), einer Antwortanweisung an das Rechenzentrum;
Empfangen, durch das Unterdrückungsmodul (3), durch Verwenden der J Unterdrücker, von Übersprechkoeffizienten jedes Ports in den K Ports, die durch das Rechenzentrum zyklisch geliefert werden; und
Senden, durch das Unterdrückungsmodul (3), einer Stoppanweisung an das Rechenzentrum (2), nachdem bestimmt wurde, dass die Übersprechkoeffizienten all der K Ports empfangen wurden.

13. Verfahren nach einem der Ansprüche 10 bis 12, wobei das Empfangen, durch das Unterdrückungsmodul (3), durch Verwenden von J Unterdrückern, von Übersprechkoeffizienten von K Ports, die durch das Rechenzentrum (2) geliefert werden, Folgendes umfasst:

Empfangen, durch das Unterdrückungsmodul (3), durch Verwenden der J Unterdrücker, von eingekapselten Datenpaketen, die durch das Rechenzentrum gesendet werden; und
Entkapsein, durch das Unterdrückungsmodul (3), der Datenpakete, um die Übersprechkoeffizienten der K Ports zu erhalten.

## Revendications

1. Appareil d'annulation de diaphonie, dans lequel l'appareil comprend :

un centre de calcul (2) et un module d'annulation (3) qui sont déployés dans différents emplacements physiques, le module d'annulation (3) comprenant L dispositifs d'annulation, et L est un entier positif ;
le centre de calcul (2) est connecté au module d'annulation (3) par le biais d'une première interface réseau, et est connecté à une puce de bande de base (1) par le biais d'une deuxième interface réseau ;
le centre de calcul (2) est configuré pour :

calculer un coefficient de diaphonie dans lequel le coefficient de diaphonie est une matrice utilisée pour annuler la diaphonie en fonction d'un paramètre d'état et d'un paramètre physique de canal qui sont signalés par la puce de bande de base (1), le paramètre d'état étant utilisé pour indiquer un état de chaque port dans les ports en ligne actuels de la puce de bande de base (1) et pour délivrer le coefficient de diaphonie aux dispositifs d'annulation dans le module d'annulation (3) par le biais de la première interface réseau ; et
chaque dispositif d'annulation dans le module d'annulation (3) est connecté à au moins un port de la puce de bande de base (1), chaque port de la puce de bande de base (1) étant connecté à un CPE, et chaque dispositif d'annulation est configuré pour prétraiter, en fonction du coefficient de diaphonie, un signal de diaphonie reçu par le biais de l'au moins un port ;
dans lequel :

L est un entier supérieur à 1, et deux quelconques des L dispositifs d'annulation sont connectés l'un à l'autre par le biais d'une troisième interface réseau ;
un ième dispositif d'annulation dans les L dispositifs d'annulation est connecté à la puce de bande de base de $N_i$ ports (1), i est un entier positif inférieur ou égal à L, et $N_i$ est un entier positif ; et
le ième dispositif d'annulation est configuré pour :
recevoir des signaux de diaphonie $N_i$ par les ports $N_i$, envoyer les $N_i$ signaux de diaphonie reçus à chacun des L-1 autres dispositifs d'annulation par le biais de la troisième interface réseau, et prétraiter les $N_i$ signaux de diaphonie en fonction du coefficient de diaphonie et des signaux de diaphonie envoyés par les autres L-1 dispositifs d'annulation.

**2.** Appareil d'annulation de diaphonie selon la revendication 1, dans lequel le centre de calcul (2) est déployé dans un serveur infonuagique ou un serveur de bureau central, et le module d'annulation (3) est déployé dans un dispositif de bureau central.

**3.** Appareil d'annulation de diaphonie selon la revendication 1, dans lequel le centre de calcul (2) comprend une unité de commande d'état et au moins une unité de calcul de coefficient ;

l'unité de commande d'état est configurée pour : recevoir le paramètre d'état et le paramètre physique de canal qui sont signalés par la puce de bande de base (1), et déterminer un modèle de calcul de coefficient de diaphonie en fonction du paramètre d'état ; et
chaque unité de calcul de coefficient est configurée pour effectuer un calcul sur le paramètre physique de canal en fonction du modèle de calcul de coefficient de diaphonie sous une instruction de l'unité de commande d'état, afin d'obtenir des coefficients de diaphonie d'une pluralité de ports ou d'une pluralité de sous-porteuses.

**4.** Appareil d'annulation de diaphonie selon la revendication 1, dans lequel la première interface réseau, la deuxième interface réseau et la troisième interface réseau sont toutes des interfaces Ethernet.

**5.** Procédé d'annulation de la diaphonie, dans lequel le procédé comprend :

la réception (201), par un centre de calcul (2) par le biais d'une première interface réseau, d'informations de port rapportées par un module d'annulation (3), le module d'annulation (3) comprenant L dispositifs d'annulation, les informations de port comprenant un identifiant d'un port connecté à chacun des L dispositifs d'annulation, et L étant un entier positif ;
la réception, par le centre de calcul (2) par le biais d'une deuxième interface réseau, d'un paramètre d'état et d'un paramètre physique de canal qui sont signalés par une puce de bande de base (1), le paramètre d'état étant utilisé pour indiquer un état de chaque port dans les ports en ligne actuels de la puce de bande de base (1) ;
chaque dispositif d'annulation dans le module d'annulation (3) est connecté à au moins un port de la puce de bande de base (1), chaque port de la puce de bande de base (1) étant connecté à un CPE ;
le calcul (205), par le centre de calcul, d'un coefficient de diaphonie en fonction du paramètre d'état et du paramètre physique de canal, le coefficient de diaphonie étant une matrice utilisée pour annuler la diaphonie ; et
la fourniture, par le centre de calcul, du coefficient de diaphonie à un dispositif d'annulation correspondant dans le module d'annulation (3) en fonction des informations de port ;
dans lequel :

L est un entier supérieur à 1, et deux quelconques des L dispositifs d'annulation sont connectés l'un à l'autre par le biais d'une troisième interface réseau ;
un ième dispositif d'annulation dans les L dispositifs d'annulation est connecté à la puce de bande de base de $N_i$ ports (1), i est un entier positif inférieur ou égal à L, et $N_i$ est un entier positif ; et
le ième dispositif d'annulation est configuré pour : recevoir des signaux de diaphonie $N_i$ par les ports $N_i$, envoyer les $N_i$ signaux de diaphonie reçus à chacun des L-1 autres dispositifs d'annulation par le biais de la troisième interface réseau, et prétraiter les $N_i$ signaux de diaphonie en fonction du coefficient de diaphonie et des signaux de diaphonie envoyés par les autres L-1 dispositifs d'annulation.

**6.** Procédé selon la revendication 5, dans lequel le calcul, par le centre de calcul, d'un coefficient de diaphonie en fonction du paramètre d'état et du paramètre physique de canal comprend :

la détermination, par le centre de calcul (2) en fonction du paramètre d'état, d'une quantité totale K de ports qui sont actuellement en ligne ; et
le calcul, par le centre de calcul, des coefficients de diaphonie des K ports en fonction du paramètre d'état et du paramètre physique de canal ; et
la fourniture, par le centre de calcul, du coefficient de diaphonie à un dispositif d'annulation correspondant dans le module d'annulation (3) en fonction des informations de port comprend :
la fourniture, par le centre de calcul (2) en fonction des informations de port, des coefficients de diaphonie des K ports à un dispositif d'annulation connecté aux K ports.

**7.** Procédé selon la revendication 6, dans lequel la fourniture, par le centre de calcul (2) en fonction des informations de port, des coefficients de diaphonie des K ports à un dispositif d'annulation connecté aux K ports comprend :

la livraison, par le centre de calcul, d'une instruction de configuration de coefficient au module d'annulation (3), l'instruction de configuration de coefficient étant utilisée pour indiquer qu'une quantité de ports correspondant aux coefficients de diaphonie à envoyer est K ; et
après avoir reçu une instruction de réponse envoyée par le module d'annulation (3), la livraison cyclique, par le centre de calcul (2) par le biais de la première interface réseau, des coefficients de diaphonie de chaque port dans les K ports au dispositif d'annulation connecté aux K ports, jusqu'à ce qu'une instruction d'arrêt envoyée par le module d'annulation (3) est reçue, l'instruction d'arrêt étant envoyée par le module d'annulation (3) après que le module d'annulation (3) a déterminé que les coefficients de diaphonie de tous les K ports sont reçus.

8. Procédé selon la revendication 6, dans lequel la fourniture, par le centre de calcul en fonction des informations de port, des coefficients de diaphonie des K ports à un dispositif d'annulation connecté aux K ports comprend :

la réalisation, par le centre de calcul, d'une encapsulation de paquets sur les coefficients de diaphonie de chaque port dans les K ports ; et
l'envoi, par le centre de calcul, de paquets encapsulés au dispositif d'annulation connecté aux K ports.

9. Procédé selon l'une quelconque des revendications 5 à 8, dans lequel la réception, par le centre de calcul (2) par le biais d'une deuxième interface réseau, d'un paramètre d'état et d'un paramètre physique de canal qui sont signalés par une puce de bande de base (1) comprend :

la réception, par le centre de calcul (2) par le biais de la deuxième interface réseau, du paramètre d'état rapporté par la puce de bande de base (1) ;
la livraison, par le centre de calcul, d'une demande d'obtention de paramètre physique de canal à la puce de bande de base (1) ; et
la réception, par le centre de calcul, du paramètre physique de canal qui est rapporté par la puce de bande de base (1) en fonction de la demande d'obtention du paramètre physique de canal.

10. Procédé d'annulation de diaphonie, le procédé comprenant :

le rapport, par un module d'annulation (3) par le biais d'une première interface réseau, des informations de port à un centre de calcul, le module d'annulation (3) comprenant L dispositifs d'annulation, les informations de port comprenant un identifiant d'un port connecté à chacun des L dispositifs d'annulation, et L est un entier positif ;
la réception, par le module d'annulation (3) au moyen des J dispositifs d'annulation desdits L dispositifs d'annulation, des coefficients de diaphonie de K ports délivrés par le centre de calcul, les J dispositifs d'annulation étant connectés aux K ports, et J étant un entier positif inférieur ou égal à L ; et
l'entraînement, par le module d'annulation (3), de chacun des J dispositifs d'annulation pour prétraiter au moins un signal de diaphonie reçu en fonction des coefficients de diaphonie ;
dans lequel :

L est un entier supérieur à 1, et deux quelconques des L dispositifs d'annulation sont connectés l'un à l'autre par le biais d'une troisième interface réseau ;
un ième dispositif d'annulation dans les L dispositifs d'annulation est connecté aux Ni ports, i est un entier positif inférieur ou égal à L, et Ni est un entier positif ; et
le ième dispositif d'annulation est configuré pour : recevoir des signaux de diaphonie Ni par les ports Ni, envoyer les Ni signaux de diaphonie reçus à chacun des L-1 autres dispositifs d'annulation par le biais de la troisième interface réseau, et prétraiter les Ni signaux de diaphonie en fonction du coefficient de diaphonie et des signaux de diaphonie envoyés par les autres L-1 dispositifs d'annulation.

11. Procédé selon la revendication 10, dans lequel l'entraînement, par le module d'annulation (3), de chacun des J dispositifs d'annulation pour prétraiter au moins un signal de diaphonie reçu en fonction des coefficients de diaphonie comprend :

lorsque J est supérieur à 1, l'entraînement, par le module d'annulation (3), de chacun des J dispositifs d'annulation à envoyer l'au moins un signal de diaphonie reçu à chacun des autres J-1 dispositifs d'annulation ; et
l'entraînement, par le module d'annulation (3), de chaque dispositif d'annulation pour prétraiter l'au moins un signal de diaphonie en fonction des coefficients de diaphonie et des signaux de diaphonie envoyés par les J-1 autres dispositifs d'annulation.

12. Procédé selon la revendication 10, dans lequel la réception, par le module d'annulation (3) au moyen de J dispositifs d'annulation, des coefficients de diaphonie de K ports délivrés par le centre de calcul (2) comprend :

la réception, par le module d'annulation (3), d'une instruction de configuration de coefficient délivrée par le centre de calcul, l'instruction de configuration de coefficient étant utilisée pour indiquer qu'une quantité de ports correspondant aux coefficients de diaphonie à envoyer est K ;
l'envoi, par le module d'annulation (3), d'une instruction de réponse au centre de calcul ;
la réception, par le module d'annulation (3) au moyen des J dispositifs d'annulation, des coefficients de diaphonie de chaque port dans les K ports qui sont délivrés cycliquement par le centre de calcul ; et
l'envoi, par le module d'annulation (3), d'une instruction d'arrêt au centre de calcul (2) après avoir déterminé que les coefficients de diaphonie de tous les K ports sont reçus.

13. Procédé selon l'une quelconque des revendications 10 à 12, dans lequel la réception, par le module d'annulation (3) au moyen de J dispositifs d'annulation, des coefficients de diaphonie de K ports délivrés par le centre de calcul (2) comprend :

la réception, par le module d'annulation (3) au moyen des J dispositifs d'annulation, des paquets encapsulés envoyés par le centre de calcul ; et
la décapsulation, par le module d'annulation (3), des paquets pour obtenir les coefficients de diaphonie des K ports.

FIG. 1

FIG. 2-1

## Operation center 02

| Processing unit 1 | Processing unit 2 | Processing unit 3 |
|---|---|---|

022

| Coefficient operation unit 1 | Coefficient operation unit 2 | Coefficient operation unit 3 |
|---|---|---|

Status control unit 021

Operation adaptation unit 023

## Cancellation module 03

Cancellation adaptation unit 032

Cancellation driving unit 033

031

| Canceller 1 | Canceller 2 | ... | Canceller L |
|---|---|---|---|

FIG. 2-2

FIG. 3-1A

CONT.
FROM
FIG. 3-1A

CONT.
FROM
FIG. 3-1A

CONT.
FROM
FIG. 3-1A

206. Divide crosstalk
coefficients of K ports into
J groups of crosstalk sub-
coefficients based on the
port information reported
by a cancellation module

207. Deliver each
group of crosstalk sub-
coefficients through the
first network interface

208. Send a stop
instruction when the
crosstalk coefficients of all
the K ports are received

209. Preprocess crosstalk signals of
the K ports based on the received
crosstalk coefficients

FIG. 3-1B

A status control unit performs packet encapsulation on crosstalk coefficients of each port

2071

The status control unit delivers a coefficient configuration instruction to a cancellation module

2072

After the status control unit receives a response instruction, the status control unit starts to cyclically send packets

2073

FIG. 3-2

A cancellation module drives each of J cancellers to separately send received at least one crosstalk signal to the other (J−1) cancellers

2091

The cancellation module drives each canceller to preprocess the at least one crosstalk signal based on received crosstalk coefficients and crosstalk signals sent by the other (J−1) cancellers

2092

FIG. 3-3

FIG. 4-1

| Master crosstalk cancellation apparatus | Slave crosstalk cancellation apparatus |
|---|---|
| Operation center 1 / Cancellation module 1 | Operation center 2 / Cancellation module 2 |

301. Receive a status parameter and a channel physical parameter that are reported by a baseband chip

301. Receive a status parameter and a channel physical parameter that are reported by a baseband chip

302. Send an interaction instruction

303. Send the channel physical parameter

304. Calculate a crosstalk coefficient based on the channel physical parameters

304. Calculate a crosstalk coefficient based on the channel physical parameters

305. Send the crosstalk coefficient

305. Send the crosstalk coefficient

306. Send a crosstalk signal

FIG. 4-2

401
First receiving unit

402
Second receiving unit

403
Calculation unit

404
Sending unit

FIG. 5

501
Sending unit

502
Receiving unit

503
Processing unit

FIG. 6

**EP 3 541 047 B1**

**REFERENCES CITED IN THE DESCRIPTION**

**Patent documents cited in the description**

- WO 2016032466 A
- US 2013215940 A